# EUROPEAN PATENT APPLICATION

(11) **EP 1 424 015 A1**
(43) Date of publication of application: **02.06.2004**
(21) Application number: 01965554.7
(22) Date of filing: 05.09.2001
(51) Int. Cl.: A23L 3/36

(54) **METHOD FOR PREPARING FROZEN FOOD**

(71) Applicant: Taiyo Kagaku Co., Ltd., Yokkaichi-shi Mie-ken 510-0825 (JP)
(72) Inventor: MASUDA, Takuya, Taiyo Kaguku Co. Ltd., Yokkaichi-shi, Mie 510-0825 (JP); MABE, Kenya, Taiyo Kaguku Co. Ltd., Yokkaichi-shi, Mie 510-0825 (JP); SATO, Norio, Taiyo Kaguku Co. Ltd., Yokkaichi-shi, Mie 510-0825 (JP); KATO, Norio, Taiyo Kaguku Co. Ltd., Yokkaichi-shi, Mie 510-0825 (JP); YAMAZAKI8, Nagahiro, Taiyo Kaguku Co. Ltd., Yokkaichi-shi, Mie 510-0825 (JP)
(74) Representative: Schüssler, Andrea, Dr.
(86) International application number: PCT/JP2001/007679
(87) International publication number: WO 2003/022079

(57) **Abstract**

The present invention relates to a method for producing a frozen food and a frozen food produced by the process. There are provided a method for producing a frozen food characterized by subjecting a food to a contact treatment with an emulsifier-added fat or oil, and thereafter freezing the food; a frozen food produced by the method; and a method of preventing fluctuation in a water content of a frozen food, characterized by subjecting a food to a contact treatment with an emulsifier-added fat or oil, and thereafter freezing the food.

## Description

### TECHNICAL FIELD

The present invention relates to a method for producing a frozen food and a frozen food produced thereby. More specifically, the present invention relates to a method capable of preventing fluctuation in a water content in a frozen food by suppressing water sublimation from the food due to a temperature change during frozen storage of the food, and a frozen food produced thereby, in which the fluctuation in a water content is prevented.

### BACKGROUND ART

Since frozen foods can be made conveniently into a edible state by thawing or heating with a microwave oven, hot water dipping, baking, or the like, the frozen foods are well accepted by consumers so that their kinds and amounts produced tend to be more and more increasing. Frozen foods which are cooked with heating are desired to be in a state close to that obtained immediately after the production. For this reason, there may be employed, for example, a method of rapidly freezing a product using a rapid freezing machine; a method of adding modified starch in order to prevent the deterioration of a product during frozen storage. However, temperature changes take place due to an open-shut operation of the door or the like during the frozen storage of the product in a freezer at a retail store or ordinary home, so that water is sublimed from the product, resulting in an undesired change in a water content. Therefore, there arise many problems such as dryness of a product surface, worsening of texture and generation of frost on a packaging material.

To date, a variety of efforts have been made to solve the problems in individual frozen foods, including in a case of a frozen pasta, there has been employed, for example, a method of adjusting a water content after noodle making and gelatinization (α-transformation) (Japanese Patent Laid-Open Nos. Sho 60-137255 and Hei 8-9912). However, there have not been known any methods for producing a frozen food that widely covers the problems.

An object of the present invention is to provide a frozen food capable of suppressing water sublimation from a product during frozen storage of the frozen food, thereby retaining water in the product for a long period of time, so that the original tastiness of the product can be reproduced when the product is thermally thawed with a microwave oven or the like.

### DISCLOSURE OF INVENTION

As a result of intensive studies in order to achieve the above object, the present inventors have found that water sublimation from food surface during frozen storage can be suppressed by subjecting a food to a contact treatment with an emulsifier-added fat or oil, and thereafter freezing the food. The present invention has been accomplished thereby.

Specifically, the present invention is directed to a method for producing a frozen food characterized by subjecting a food to a contact treatment with an emulsifier-added fat or oil, thereby coating a food surface with the fat or oil, and thereafter freezing the treated food.

### BEST MODE FOR CARRYING OUT THE INVENTION

The kinds of the frozen food in the present invention is not particularly limited, as long as its tastes or the like are not affected by the addition of a fat or oil. Concrete examples of the frozen food include pastas such as spaghetti, capelline, elbow pasta, penne, and macaroni; Asian noodles such as wheat noodles (*udon*), buckwheat noodles (*soba*), Chinese noodles (*ramen*), and Japanese noodles served in ice and water (*hiyamugi*); boiled or fresh vegetables such as green peas, carrots, broccolis, corns, and potatoes; roast fish of fillet of salmon, trout, and Spanish mackerel, saury, sea bream and the like; cooked rice foods such as doria, white rice, vinegared fish and rice (*sushi*), rice balls, and baked rice balls; *shao-mai*, dumplings with minced stuffing (*gyoza*), egg rolls, rolled omelets with soup (*dashimaki*), boiled shrimps and the like.

The fat or oil used in the present invention is not particularly limited, and those having as excellent flavor as possible are preferred. Examples of the raw material having excellent flavor include safflower oil, sunflower oil, rapeseed oil, corn oil, soybean oil, olive oil, rice oil, purified palm oil, purified lard, hydrogenated products thereof and the like.

The emulsifier used in the present invention is not particularly limited, as long as the emulsifier is soluble in the oil or fat and safe as a food additive. The emulsifier includes, for instance, one or a combination of two or more kinds selected from the group consisting of polyglycerol esters of fatty acids, sucrose fatty acid esters, polyglycerol polyricinoleates, propylene glycol fatty acid esters, organic acid esters monoglycerides, soybean lecithin, egg yolk lecithin and the like. In addition, the fatty acid moiety of the emulsifier is not particularly limited, and oleic acid is preferred from the viewpoint of flavor.

From the viewpoint of the ability of reducing a surface tension of the oil or fat, it is preferable that the emulsifier comprises a polyglycerol ester of a fatty acid, and that the average degree of polymerization of the polyglycerol is preferably 2 to 10, more preferably 2 to 5. Furthermore, in order to improve the adhesion efficiency of the emulsifier to foods, the emulsifier comprises preferably a combination of a polyglycerol ester of a fatty acid and lecithin. In this case, it is preferable that the polyglycerol ester of a fatty acid and lecithin in the emulsifier is in a combination of 5 to 95% by weight of the polyglycerol ester of a fatty acid and 95 to 5% by weight of lecithin, and more preferably in a combination of 20 to 80% by weight of the polyglycerol ester of a fatty acid and 80 to 20% by weight of lecithin.

The term "emulsifier-added fat or oil" in the present invention refers to a fat or oil of which surface tension has been extremely reduced compared to an ordinary fat or oil by adding an emulsifier in an amount of preferably from 0.5 to 15 parts by weight, more preferably from 1 to 10 parts by weight, based on 100 parts by weight of the fat or oil. When the fat or oil having a reduced surface tension is contacted with a food, the fat or oil can be spread over the entire surface of the food without resistance and thinly uniformly cover the food.

The surface tension of the emulsifier-added fat or oil is not particularly limited, and those having a surface tension reduced to 20 mN/m (at 60°C) or less are preferred, more preferably 10 mN/m (at 60°C) or less. The surface tension of the emulsifier-added fat or oil can be determined by measuring a dynamic surface tension of the fat or oil with ion-exchanged water by, for instance, a drop weight method at 3 seconds after interfacial formation.

The amount of the emulsifier-added fat or oil added to the food is not particularly limited because the amount also differs depending upon the desired food material. It is preferable that the amount is from 0.2 to 8 parts by weight, more preferably from 0.5 to 5 parts by weight, based on 100 parts by weight of the food. This is because when the amount of the emulsifier-added fat or oil added to the food is 0.2 parts by weight or more, the suppressive effect for water sublimation during frozen storage of the frozen food is excellent, and when the amount is 8 parts by weight or less, the flavor of the food is not impaired.

The method for subjecting a food to a contact treatment with an emulsifier-added fat or oil includes a method comprising removing crude heat of the food heat-treated, and thereafter directly spraying or applying an emulsifier-added fat or oil over the food. When the fat or oil used is palm oil, lard, or a hydrogenated oil, since the fat or oil may be solid at an ambient temperature in some cases, it is desired that the fat or oil is used after dissolving the fat or oil with heating in a hot water bath or the like.

The freezing is carried out after the food is contacted with the emulsifier-added fat or oil. The method of freezing is not particularly limited and can be achieved using a commonly used freezing apparatus. Industrially, it is desired that the food obtained is transferred to a tray for freezing to be rapidly frozen using a continuous tunnel type blow freezing apparatus or the like. Also, the food may be frozen with a batch-wise freezer.

According to the method of the present invention, there can be produced a food in which water sublimation from a frozen food is suppressed and fluctuation in a water content is prevented.

Accordingly, in another embodiment of the present invention, there is provided a method of preventing fluctuation in a water content of a frozen food, comprising subjecting a food to a contact treatment with an emulsifier-added fat or oil, and subsequently freezing the food. In other words, the preventive effect of fluctuation in a water content of a frozen food produced according to the method of the present invention is obtained by preventing loss of a water content due to water sublimation from the food caused by temperature changes during frozen storage. As a result, the product appearance is improved because the frost adhesion to the packaging material is prevented, and there can be provided texture and freshness of the original product upon eating or drinking the product because the dryness of the product can be prevented.

Furthermore, the method of the present invention has some effects of not only retention of water in a food during frozen storage, but also suppression of the adhesion of the products by themselves, thereby making the foods themselves easily separable from each other after thawing with heating in a microwave oven or the like. This effect is attributable to the suppression of deposition of the foods themselves because the surface of the food is thinly and uniformly covered by a fat or oil, so that an improving effect in loosening, especially in cooked rice foods and noodles, can be expected at the same time.

The present invention will be further explained by means of Examples, and the present invention is not limited to those exemplified by any means.

### Example 1

A frozen spaghetti was prepared by the procedures (1) to (3) and frozen in a rapid freezer (-60°C), and thereafter subjected to frozen storage in a freezer capable of automatically changing its internal temperature to a desired level (SUBZEROMC-710, manufactured by TABAI ESPEC) in 20 repeats of temperature changes between -20°C and -5°C during a 10-day period. Subsequently, the degree of frost deposition to the packaging material was examined, and the product was taken out from the packaging material and subjected to a treatment of thawing with heating in a microwave oven, and its loosening and texture were evaluated.

### (1) A commercially available dry spaghetti (diameter: 1.6 mm, manufactured by SHOWA SANGYO CO., LTD., water content: about 12% by weight) was boiled in boiling water containing 1% by weight salt to gelatinization

(α-transformation) for 10 minutes, and thereafter transferred to cold water and rapidly cooled. (2) The spaghetti was well drained with a strainer, and 1 part by weight of a mixture, which had been prepared by adding 2 parts by weight of a polyglycerol ester of a fatty acid (SUNSOFT Q-17B, manufactured by Taiyo Kagaku Co., Ltd.) based on 100 parts by weight of corn salad oil, was added, based on 100 parts by weight of the spaghetti, and thoroughly mixed to spread the mixed oil over the entire spaghetti. (3) A 220 g serving was placed in a see-through packaging material with freezing resistance, and the packaging material was sealed.

### Example 2

Entirely the same treatments as in Example 1 were carried out except that 2 parts by weight of a mixture prepared by adding 2 parts by weight of a polyglycerol ester of a fatty acid (SUNSOFT Q-17B, manufactured by Taiyo Kagaku Co., Ltd.) based on 100 parts by weight of com salad oil, was added, based on 100 parts by weight of the spaghetti in Example 1.

### Example 3

Entirely the same treatments as in Example 1 were carried out except that 1 part by weight of a mixture prepared by adding 2 parts by weight of a polyglycerol ester of a fatty acid (SUNSOFT Q-17B, manufactured by Taiyo Kagaku Co., Ltd.) and 1 part by weight of soybean lecithin (SUNSOFT L-8, manufactured by Taiyo Kagaku Co., Ltd.) based on 100 parts by weight of corn salad oil, was added, based on 100 parts by weight of the spaghetti in Example 1.

### Example 4

Entirely the same treatments as in Example 3 were carried out except that 2 parts by weight of a mixture prepared by adding 2 parts by weight of a polyglycerol ester of a fatty acid (SUNSOFT Q-17B, manufactured by Taiyo Kagaku Co., Ltd.) and 1 part by weight of soybean lecithin (SUNSOFT L-8, manufactured by Taiyo Kagaku Co., Ltd.) based on 100 parts by weight of corn salad oil, was added, based on 100 parts by weight of the spaghetti in Example 3.

### Comparative Example 1

Entirely the same treatments as in Example 1 were carried out except that 2 parts by weight of corn salad oil without adding an emulsifier was added based on 100 parts by weight of spaghetti in Example 1.

### Control Group 1

Entirely the same treatments as in Example 1 were carried out except that addition of a fat or oil was not carried out in Example 1.

The results of Examples 1 to 4, Comparative Example 1 and Control Group 1 and each of dynamic surface tension are shown in Table 1. The evaluation criteria are as follows.
(Frost Deposition) ⓞ : very little; ○ : little; Δ : somewhat much; × : much
(Loosening) ⓞ : very excellent; ○ : excellent; Δ : slightly poor; × : poor
(Texture) ⓞ : very excellent; ○ : excellent; Δ : slightly poor; × : poor

**Table 1**

| | Surface Tension of Fat or Oil (mN/m) | Amount of Fat or Oil (Parts by Weight) | Frost Deposition | Loosening After Thawing | Texture After Thawing |
|---|---|---|---|---|---|
| Example 1 | 3.7 | 1 | ○ | ○ | ○ |
| Example 2 | 3.7 | 2 | ○ | ⓞ | ⓞ |
| Example 3 | 3.1 | 1 | ○ | ○ | ○ |
| Example 4 | 3.1 | 2 | ⓞ | ⓞ | ⓞ |
| Comparative Example 1 | 39.0 | 2 | × | Δ | Δ |
| Control Group 1 | - | - | × | × | × |

It can be seen from the results in Table 1 that as shown in Examples 1 to 4, since the spaghetti is subjected to a contact treatment with an emulsifier-added oil or fat, water sublimation of the frozen spaghetti is suppressed during the frozen storage, the frost deposition over the packaging material is reduced, and texture and loosening of the spaghetti after the heat-treatment in an microwave oven becomes more excellent, as compared to those of Comparative Example 1 and Control Group 1. Especially in Examples 2 and 4, the texture after thawing with heating in a microwave oven was as excellent as that of freshly boiled spaghetti. In Comparative Example 1 and Control Group 1, loosening was poor and the surface of the spaghetti became harder. Especially in Control Group 1, severe frost was generated so that the spaghetti obtained had a rubber-like texture.

### Example 5

Frozen roast fish was prepared by the procedures (1) to (3) and frozen in a rapid freezer (-60°C), and thereafter subjected to frozen storage in a freezer capable of automatically changing its internal temperature to a desired level (SUBZEROMC-710, manufactured by TABAI ESPEC) in 30 repeats of temperature changes between -20°C and -5°C during a 30-day period. Subsequently, the degree of frost deposition to the packaging material was examined, and the product was taken out from the packaging material and subjected to a treatment of thawing with heating in a microwave oven, and its luster of the surface of roasted salmon and texture were evaluated.
(1) A fillet of salmon (thickness: 3 cm) was roasted on a wire mesh, and an oil coming out to the surface was wiped with a kitchen paper. (2) A mixture which had been prepared by adding 2 parts by weight of a polyglycerol ester of a fatty acid (SUNSOFT Q-17B, manufactured by Taiyo Kagaku Co., Ltd.) based on 100 parts by weight of rapeseed refined oil, was sprayed so as to adhere the oil thereon in an amount equivalent to 2 parts by weight, based on 100 parts by weight of the roasted salmon. (3) The resulting roasted salmon was placed in a see-through packaging material with freezing resistance, and the packaging material was sealed.

### Example 6

Entirely the same treatments as in Example 5 were carried out except that a mixture prepared by adding 2 parts by weight of a polyglycerol ester of a fatty acid (SUNSOFT Q-17B, manufactured by Taiyo Kagaku Co., Ltd.) and 1 part by weight of soybean lecithin (SUNSOFT L-8, manufactured by Taiyo Kagaku Co., Ltd.) based on 100 parts by weight of rapeseed refined oil, was sprayed so as to adhere the oil thereon in an amount equivalent to 2 parts by weight, based on 100 parts by weight of the roasted salmon in Example 5.

### Comparative Example 2

Entirely the same treatments as in Example 5 were carried out except that rapeseed refined oil without adding an emulsifier was sprayed so as to adhere the oil thereon in an amount equivalent to 2 parts by weight, based on 100 parts by weight of the roasted salmon in Example 5.

### Control Group 2

Entirely the same treatments as in Example 5 were carried out except that spraying of a fat or oil in Example 5 was not carried out.

The results of Examples 5 to 6, Comparative Example 2 and Control Group 2 are shown in Table 2. The evaluation criteria are as follows.
(Frost Deposition) ⓞ : very little; ○ : little; Δ : somewhat much; × : much
(Luster) ⓞ : very excellent; ○ : excellent; Δ : little poor; × : poor
(Texture) ⓞ : very excellent; ○ : excellent; Δ : little poor; × : poor

**Table 2**

| | Surface Tension of Fat or Oil (mN/m) | Amount of Fat or Oil (Parts by Weight) | Frost Deposition | Luster After Thawing | Texture After Thawing |
|---|---|---|---|---|---|
| Example 5 | 3.2 | 2 | ○ | ⓞ | ○ |
| Example 6 | 2.6 | 2 | ⓞ | ⓞ | ⓞ |
| Comparative Example 2 | 38.0 | 2 | × | ○ | Δ |
| Control Group 2 | - | - | × | × | × |

It can be seen from the results in Table 2 that in Examples 5 and 6, since the roasted salmon is subjected to spraying with an emulsifier-added oil or fat, water sublimation of the frozen roasted salmon is suppressed during the frozen storage, and the frost deposition over the packaging material is reduced, so that luster of the fillet of the roasted salmon after cooking with heating with a microwave oven is evident as that just after roasting, and the texture is excellent such that the fillet is juicy even to its internal, as compared to those of Comparative Example 2 and Control Group 2. As to Comparative Example 2, although its luster was excellent, much frost was generated, so that the surface became harder as compared to those of Examples 5 and 6, and its texture was oily. As to Control Group 2, much frost was generated, the luster became poorer such that the roasted salmon surface was dried, and the texture was harder even to its internal after the cooking with heating with a microwave oven.

### INDUSTRIAL APPLICABILITY

By producing a frozen food according to the method of the present invention, the water sublimation from the surface of the food material during frozen storage in a freezer such as those at a retail store and at ordinary home, in which a temperature change is likely to take place due to open-shut operation of the door can be suppressed, so that frost deposition to the packaging material and dryness of the food can be suppressed, so that there can be provided a tastiness which is as fresh as that freshly cooked at all times.

## Claims

1. A method for producing a frozen food **characterized by** subjecting a food to a contact treatment with an emulsifier-added fat or oil, and thereafter freezing the food.

2. The method according to claim 1, wherein the emulsifier-added fat or oil has a surface tension of 20 mN/m (at 60°C) or less.

3. The method according to claim 1 or 2, wherein the contact treatment is carried out by spraying or application.

4. The method according to any one of claims 1 to 3, wherein the frozen food is a pasta or noodle.

5. The method according to any one of claims 1 to 3, wherein the frozen food is roast fish.

6. The method according to any one of claims 1 to 3, wherein the frozen food is a fresh vegetable or boiled vegetable.

7. The method according to any one of claims 1 to 6, wherein the emulsifier comprises a polyglycerol ester of a fatty acid.

8. The method according to any one of claims 1 to 6, wherein the emulsifier comprises a combination of 5 to 95% by weight of a polyglycerol ester of a fatty acid and 95 to 5% by weight of lecithin.

9. A frozen food produced by the method as defined in any one of claims 1 to 8.

10. A method of preventing fluctuation in a water content of a frozen food, **characterized by** subjecting a food to a contact treatment with an emulsifier-added fat or oil, and thereafter freezing the food.
